# EUROPEAN PATENT APPLICATION

(11) **EP 4 238 855 A1**
(43) Date of publication of application: **06.09.2023**
(21) Application number: 23157568.9
(22) Date of filing: 20.02.2023
(51) Int. Cl.: B62D 55/116, B62D 55/15

(54) **AN UNDERCARRIAGE FOR A VEHICLE WITH VARIABLE ATTITUDE**

(30) Priority: 04.03.2022 IT 202200004181; 04.03.2022 IT 202200004184
(71) Applicant: ALPIrobot S.r.l., 12031 Bagnolo Piemonte (Cuneo) (IT)
(72) Inventor: PICOTTO, Giuseppe, I-12031 Bagnolo Piemonte (Cuneo) (IT); ALLASIA, Simone, I-12031 Bagnolo Piemonte (Cuneo) (IT)
(74) Representative: De Bonis, Paolo

(57) **Abstract**

Disclosed herein is an undercarriage (1) for a vehicle (V) with variable attitude, configured for bringing about a twofold attitude variation of an oscillating frame member (12) of said undercarriage (1). The attitude variation comprises, optionally in combination, a rotation and a translation of the oscillating frame member (12).

## Description

### TEXT OF THE DESCRIPTION

### Field of the Invention

The present invention relates to vehicles with variable attitude, specifically to vehicles provided with attitude levelling systems configured for maintaining a horizontal attitude of the vehicle superstructures even in the presence of steep terrain. The invention was devised with particular reference to autonomous driving vehicles (without on-board operator) which may be used e.g. in agricultural or earth-moving machinery.

### Prior Art

In the field of agricultural or earth-moving machinery, and more generally of the vehicles to be employed on rough or uneven ground, the need is felt for levelling systems for the vehicle superstructures, in order to keep the latter in a substantially horizontal attitude regardless of the conditions of the ground the vehicle is moving on, while the conditions of the ground are followed by the (self-moving) undercarriage carrying the superstructures.

A common situation of use of this kind of vehicles is the movement along a slope, e.g. for cleaning the slope; this may be the case of an embankment which has a sloping side requiring a periodic cutting of the vegetation.

According to the inclination of the slope, the levelling system on the vehicle is required to correct the attitude of the superstructures, generating a variation of the relative angular position between the superstructures and the undercarriage in such a way as to improve the attitude of the superstructures and as to shift the vehicle centre of gravity to a position less favourable to the onset of a vehicle overturning.

In such a situation, the vertical load acting on each set of motion members of the vehicle (wheels, tracks, etc.) on opposed sides of the undercarriage is not evenly distributed, but it weighs more on the motion members which lie downhill on the slope. In other words, although the centre of gravity is in a safe position as regards overturning, the attitude variation of the superstructures, together with the inclination of the ground, leads to an overall transverse unbalance of the vehicle.

The consequence of such a condition is a tendency to an uphill drift of the vehicle, i.e., a drift towards the side of the vehicle having a lesser vertical load. This is due to the fact that the motion members on the less loaded side may exert a lower tractive force on the ground because of the reduced vertical load weighing thereon, while the motion members on the more loaded side of the vehicle may exert a remarkably higher tractive force on the ground, because they are subjected to a higher load. As a consequence, the moment applied to the motion member(s) on the more loaded side of the vehicle will certainly lead to an advancing condition free of slipping, while the (generally identical) moment applied to the motion member (s) on the less loaded side of the vehicle will lead to exceeding the grip limit and to a slipping of the motion member(s). ultimately, the more loaded side will carry out a wider movement than the less loaded side, therefore generating a yaw/swerve towards the less loaded side (in a way similar to the intentional differential swerve operated on tracked vehicles).

In manned vehicles, i.e. vehicles driven by a human operator, the driver may contrast such tendency by steering the vehicle uphill, while visually determining the amount of correction, but in the case of autonomous driving vehicles such an action is generally impracticable without greatly complicating the driving and propelling system of the vehicle and/or the system for variating the attitude of the superstructures.

In this regard, it must be kept in mind that in unmanned vehicles the general size of the vehicle is usually smaller than in similar vehicles with a human operator. Even with the implementation of more complex systems for attitude variation, which are adapted not only to correct the attitude of the superstructures, but also to change the position thereof with respect to the undercarriage in order to further modify the position of the centre of gravity, in any case such systems would not be adapted to be installed in the small spaces available on autonomous driving vehicles, especially in the case of fixed track vehicles. Keeping a fixed track enables, i.a., to implement undercarriages which do not exceed the transverse dimensions of the working area, and to avoid further complications in the structure of the undercarriage. However, in the known undercarriages and vehicles, the choice of an undercarriage having a variable track is virtually mandatory to avoid the drift phenomena mentioned in the foregoing.

Moreover, the small available space on the undercarriages for unmanned vehicles makes it extremely difficult to install any equipment adapted to be coupled with external accessories, so that it is frequently necessary to opt for compromises, which are of no advantage to the general and operating economy of the vehicle or to the possibility of installing a satisfactory range of accessories.

### Object of the Invention

The invention aims at solving the technical problems mentioned in the foregoing. Specifically, the invention aims at providing a vehicle with variable attitude having a system for attitude variation adapted to avoid any instance of vehicle drift, specifically of uphill drift (or generally speaking a drift towards the less vertically loaded side), and being moreover characterized by a very compact size, so as to enable the equipment of vehicles which do not have the station for a driver.

A further object is to provide a vehicle, specifically an autonomous driving vehicle, adapted to be connected to a wide range of accessories without causing any complication in structure, while complying with the strict constraints of size inherent in this type of vehicles.

### Summary of the Invention

The object of the invention is achieved by a vehicle having the features set forth in the claims that follow, which form an integral part of the technical disclosure provided herein with in relation to the invention.

In a first embodiment, an undercarriage (1) for a vehicle (V) with variable attitude comprising:
- a first longitudinal frame member (2)
- a second longitudinal frame member (4)
- at least one first transverse frame member (6, 8) positioned between and connecting said first longitudinal frame member (2) and second longitudinal frame member (4)

wherein each of said first longitudinal frame member (2) and second longitudinal frame member (4) comprises at least one motion member (W) configured for supporting and advancing said undercarriage (1) on the ground (G),
the undercarriage (1) further comprising:
   - a slider (10) which engages said at least one first transverse frame member (6, 8) and is movable there along through positions comprised between said first longitudinal frame member (2) and second longitudinal frame member (4),
   - a first actuator unit (14) configured for varying a position (Y12+, Y12-) of said slider (10) with respect to said first longitudinal frame member (2) and second longitudinal frame member (4) along said at least one transverse frame member (6, 8),
   - an oscillating frame member (12) pivotally connected to said slider (10) about a longitudinal axis (X12),
   - a second actuator unit (16) configured for varying an angular position (R12+, R12-) of said oscillating frame member (12) with respect to said slider (10).

In a second embodiment according to the first embodiment, wherein said at least one first transverse frame member (6, 8) comprises a pair of transverse frame members arranged spaced from one other along the longitudinal direction (X).

In a third embodiment according to the second embodiment, wherein said slider (10) comprises a first bushing (18) engaging a first transverse frame member (6) of said pair, and a second bushing (20) engaging a second transverse frame member (8) of said pair.

In a fourth embodiment according to any of the preceding embodiments, wherein said first actuator unit (14) comprises a first linear actuator having (A14) a first end (26) connected to said slider (10) and a second end (28) connected to one of said first longitudinal frame member (2) and second longitudinal frame member (4).

In a fifth embodiment according to the fourth embodiment, wherein said first linear actuator (A14) extends through said slider (10).

In a sixth embodiment according to any of the second to fifth embodiments, wherein said first and second transverse frame members (6, 8) comprise a first cylindrical rod and a second cylindrical rod, each cylindrical rod having a first end and a second end connected to said first longitudinal frame member (2) and second longitudinal frame member (4), respectively.

In a seventh embodiment according to any of the preceding embodiments, wherein each of said first longitudinal frame member (2) and second longitudinal frame member (4) comprises, alternatively, one of:
- a track carrier beam, said track carrier beam comprising at least a pair of motion members (W), particularly sprockets, whereon a track (TR) is engaged,
- a wheel carrier beam, said wheel carrier beam comprising at least one pair of motion members (W), particularly treaded wheels, configured for ground contact motion.

In an eighth embodiment according to the seventh embodiment, wherein each track carrier beam comprises an inner compartment (V2, V4) housing at least one third actuator unit (42, 44), and wherein the undercarriage (1) further comprises at least one accessory coupling frame (54, 56, 60, 62) rotatably mounted on said undercarriage (1) about a transverse axis,
said at least one third actuator unit (42, 44) being configured to drive an oscillation of the accessory frame (54, 56, 60, 62) about the respective transverse axis (Y6, Y8).

In a ninth embodiment according to the first embodiment, wherein said second actuator unit (16) comprises a second linear actuator (A16) having a first end (34) connected to said slider (10) and a second end (36) connected (40) to said oscillating frame member (12) .

In a tenth embodiment, a vehicle (V) comprising an undercarriage (V) according to any one of the preceding claims and a superstructure (T1, T2, E, CS) installed on said oscillating frame member (12) of said undercarriage (1).

In an eleventh embodiment, an undercarriage (1) for a vehicle (V) comprising:
- a first longitudinal frame member (2)
- a second longitudinal frame member (4)
- at least one first transverse frame member (6, 8) arranged between and connecting said first longitudinal frame member (2) and said second longitudinal frame member (4)

wherein each of said first longitudinal frame member (2) and said second longitudinal frame member (4) comprises at least one motion member (W) configured for supporting and advancing said undercarriage (1) on the ground (G)
and further wherein:
   at least one of said first longitudinal frame member (2) and second longitudinal frame member (4) comprises an internal compartment (V2, V4) housing at least one actuator unit (42, 44),
and wherein the undercarriage (1) further comprises at least one accessory coupling frame (54, 56, 60, 62) rotatably mounted on said undercarriage (1) about a transverse axis, said at least one actuator unit (42, 44) being configured to drive a rotation of the accessory coupling frame (54, 56, 60, 62) about the respective transverse axis (Y6, Y8).

In a twelfth embodiment according to the eleventh embodiment, wherein each of said first longitudinal frame member (2) and second longitudinal frame member (4) comprises an inner compartment (V2, V4) housing a respective actuator unit, each respective actuator unit (42, 44) being configured to drive a rotation of the accessory frame (54, 56, 60, 62) about the respective transverse axis (Y6, Y8).

In a thirteenth embodiment according to the eleventh or the twelfth embodiment, wherein each actuator unit (42, 44) comprises at least one linear actuator comprising a first end pivotally connected (46C, 48C, 50C, 52C) to the corresponding longitudinal frame member (2, 4) about a transverse axis, and a second end pivotally connected to the corresponding accessory coupling frame, the corresponding accessory coupling frame being further pivotally connected to said undercarriage (1) about a transverse axis (Y6, Y8) distinct from the transverse axis (46P, 48P; 50P, 52P) at which said second end is pivotally connected to the corresponding accessory coupling frame.

In a fourteenth embodiment according to the twelfth embodiment, wherein each actuator unit (42, 44) comprises a pair of linear actuators, and wherein said undercarriage comprises a first and a second accessory coupling frame arranged at opposed longitudinal ends of said undercarriage (1), each of said first accessory coupling frame and second accessory coupling frame being pivotally connected to a respective transverse axis, and being pivotally connected to a respective second end of the actuators of said pair.

In a fifteenth embodiment according to the thirteenth or the fourteenth embodiment, wherein the transverse axis at which the first ends of each linear actuator are pivotally connected to the corresponding swing arm is different from the transverse axis (Y6, Y8) at which each of said first accessory coupling frame and second accessory coupling frame (54, 56; 60, 62) is pivotally connected to the undercarriage (1).

In a sixteenth embodiment according to any of the preceding eleventh to fifteenth embodiment, wherein said at least one first transverse frame member (6, 8) comprises a pair of transverse frame members arranged spaced relative to each other along the longitudinal direction (X), each transverse frame member extending along a respective transverse axis (Y6, Y8) of said undercarriage, and wherein moreover said first and second transverse frame members (6, 8) further comprise a first cylindrical rod and a second cylindrical rod, each cylindrical rod having a first end and a second end connected to said first longitudinal frame member (2) and second longitudinal frame member (4), respectively.

In a seventeenth embodiment according to the sixteenth embodiment, wherein each of said first accessory coupling frame and second accessory coupling frame is pivotally connected to a corresponding transverse frame member (6, 8).

In an eighteenth embodiment according to the sixteenth or the seventeenth embodiment, the undercarriage further comprising
- a slider (10) which engages said at least one first transverse frame member (6, 8) and is movable therealong through positions between said first longitudinal frame member (2) and second longitudinal frame member (4),
- an actuator unit (14) of said slider (10) configured for varying a position (Y12+, Y12-) of said slider (10) relative to said first longitudinal frame member (2) and second longitudinal frame member (4) along said at least one transverse frame member (6, 8),
- an oscillating frame member (12) pivotally connected to said slider (10) about a longitudinal axis (X12),
- an actuator unit (16) of said oscillating frame member (12) configured for varying an angular position (R12+, R12-) of said oscillating frame member (12) with respect to said slider (10).

In a nineteenth embodiment according to the eighteenth embodiment, wherein said slider (10) comprises a first bushing (18) engaging a first transverse frame member (6) of said pair, and a second bushing (20) engaging a second transverse frame member (8) of said pair.

In a twentieth embodiment according to any of the eighteenth or nineteenth embodiments, wherein the actuator unit (14) of said slider comprises a linear actuator having (A14) a first end (26) connected to said slider (10) and a second end (28) connected to one of said first longitudinal frame member (2) and second longitudinal frame member (4), the linear actuator (A14) traversing said slider (10).

### Brief Description of the Figures

The invention will now be described with reference to the annexed Figures, which are provided by way of non-limiting example only, and wherein:
- Figure 1 is a perspective view of a vehicle according to the invention, with a few parts omitted for better clarity of illustration,
- Figure 2 is a perspective view of an undercarriage for the vehicle according to the invention, whereas Figure 2A is a view along arrow II/A of Figure 2 in partial transparency,
- Figures 3 to 10 show various operating conditions of the undercarriage according to the invention,

- Figure 11 shows a further advantageous aspect of the vehicle according to the invention, and
- Figures 12 and 13 show two further operating conditions of the undercarriage according to the invention, referring to the aspect of Figure 11.

### Detailed Description

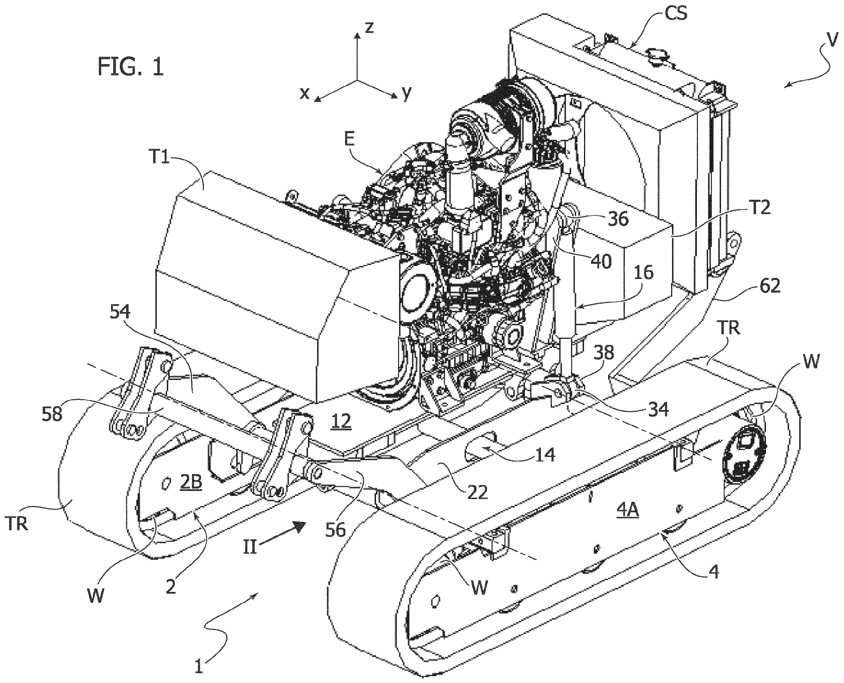

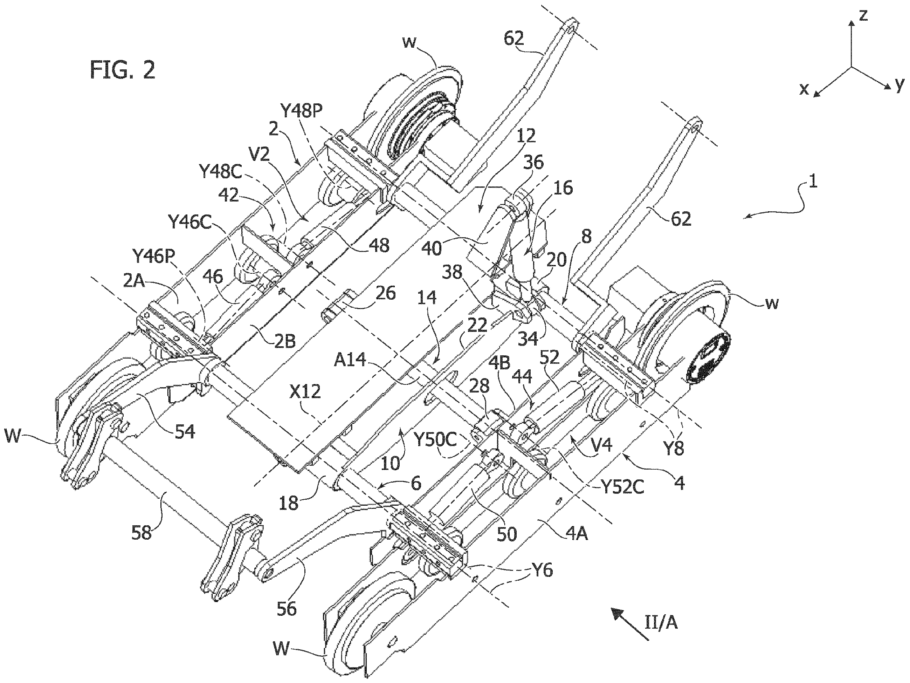

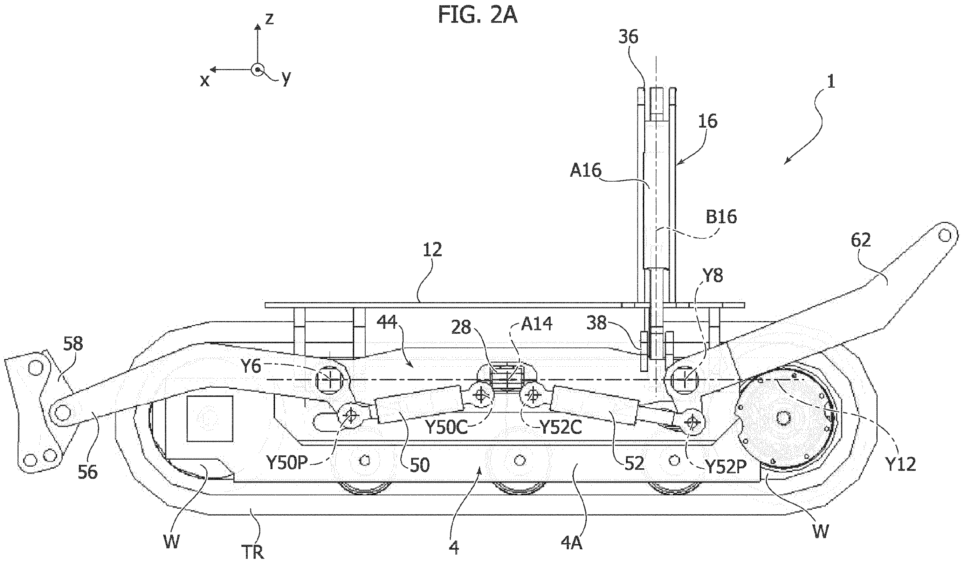

Reference V in Figure 1 and reference 1 in Figure 2 generally denote a vehicle with variable attitude according to the invention. The description in the following will primarily refer to the undercarriage 1, because the vehicle V comprises the undercarriage 1 with the addition of superstructures and optional accessories, which may vary according to the setup. The Cartesian reference system X-Y-Z in the Figures indicates the spatial directions along which the description of vehicle V and of undercarriage 1 is provided. Axis X denotes a longitudinal direction, axis Y denotes a transverse direction and axis Z denotes a vertical direction. The references assigned to the axes have a prefix corresponding to the direction they are parallel to. In the case of axes which are movable with respect to the system X-Y-Z, the prefix will no longer refer to the main directions.

Referring to Figure 2, the undercarriage 1 comprises:
- a first longitudinal frame member 2
- a second longitudinal frame member 4
- at least one first transverse frame member positioned between and connecting the first longitudinal frame member 2 and the second longitudinal frame member 4. In the presently illustrated preferred embodiments, the undercarriage 1 comprises a pair of transverse frame members 6, 8, having respective (parallel) axes Y6, Y8 arranged spaced from one another along the longitudinal direction X.

Each longitudinal frame member 2, 4 comprises at least one motion member W configured for supporting and advancing said undercarriage on the ground. The structure of the frame members 2, 4 and the configuration of the motion members W in the embodiments of the invention will be described in detail in the following.

The undercarriage 1 moreover comprises:
- a slider 10 which engages the at least one first transverse frame member (in the Figures, it engages members 6, 8) and is movable there along (in the Figures along members 6, 8) through positions between the first longitudinal frame member 2 and the second longitudinal frame member 4,
- an oscillating frame member 12 pivotally connected to the slider 10 about a longitudinal axis X12,
- a first actuator unit 14 configured for varying a position of the slider 10 with respect to the frame members 2, 4, and
- a second actuator unit 16 configured to vary an angular position of the oscillating frame member 12 with respect to the slider 10.

Such elements belong to a system for the attitude variation of the undercarriage 1 and of the vehicle V.

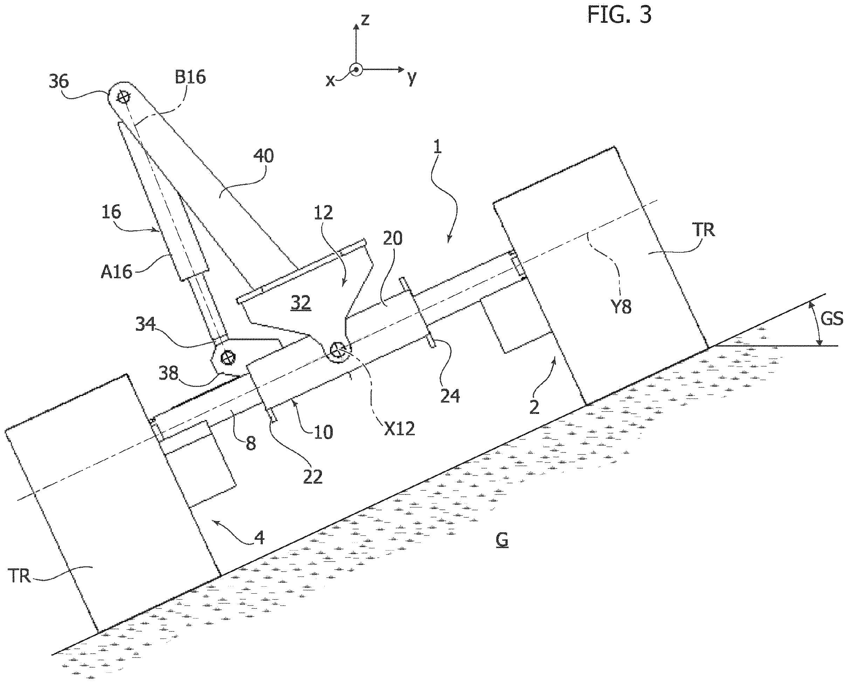

Referring to Figure 2 (and, more generally, to Figures 1 and 3-1), in the preferred embodiments comprising the pair of transverse frame members 6, 8, the slider 10 comprises a first bushing 18 engaging the transverse frame member 6, and a second bushing 20 engaging the transverse frame member 8. The bushings 18, 20 are joined longitudinally by means of a first plate 22 and a second plate 24 arranged at opposed ends of the bushings, so that the assembly of the bushings 18, 20 and of the plates 22, 24 generally exhibits a quadrangular shape.

Each transverse frame member 6, 8 is preferably implemented as a rod having a circular section (which may be hollow or solid, according to needs) with an anti-friction coating, e.g. a chrome-plating, on the surface. Preferably, the rods 6, 8 may comprise ends having a polygonal section (while in such cases the rest of the rod keeps a circular section) which engage corresponding seats on the longitudinal frame members 2, 4, so as to prevent the rotation thereof about axes 6, 8. Such a solution, albeit preferred, is not the only possible solution.

As a consequence, bushings 18, 20 have a lumen with a circular section which is identical, without considering the operating clearances, with the circular section of the rods 6, 8, so that each bushing 18, 20 may slidably engage the corresponding rod and may move axially along the latter in the direction of axes Y6 and Y8.

This enables the translation of slider 10 in the transverse direction between the frame members 2, 4, because, as may be seen in the Figure, they substantially constitute a shoulder which limits the stroke of slider 10, the rods 6, 8 being fixed directly to the frame member 2, 4 themselves.

As regards the transverse movement of slider 10, the first actuator unit 14 comprises a linear actuator A14 having an axis Y14 and comprising a first end 26 connected to slider 10 and a second end 28 connected to one of the frame members 2, 4 (in the Figures, the connection regards member 4, but it is obviously possible, as an alternative, to envisage a connection to member 2). Preferably, the linear actuator is hydraulic or pneumatic, and the ends 26, 28 are pivotally connected to the slider 10 and to the frame member 4 (or 2) essentially in order to avoid an excessive number of hyperstaticity degrees. According to an aspect of the invention, the linear actuator traverses slider 10: in order to prevent the presence of the actuator A14 along the respective axis Y14 from limiting the stroke of the slider 10, the latter is configured in such a way that the plates 22, 24 are perforated at axis Y14, so as to define two aligned windows through which the actuator A14 extends. Generally speaking, according to the size of actuator A14 and to the transverse distance between the frame members 2 and 4, either one or both plates 22, 24 may be perforated, and if only one plate is perforated, it is the plate directly facing the frame member 2 or 4 to which end 28 is fixed.

In this way, a significant stroke section is recovered for the slider 10, thus avoiding the necessity of actuator A14 being always positioned with its ends between the frame member 2, 4 to which the end 28 is connected and the plate 22 or 24 to which the end 26 is connected.

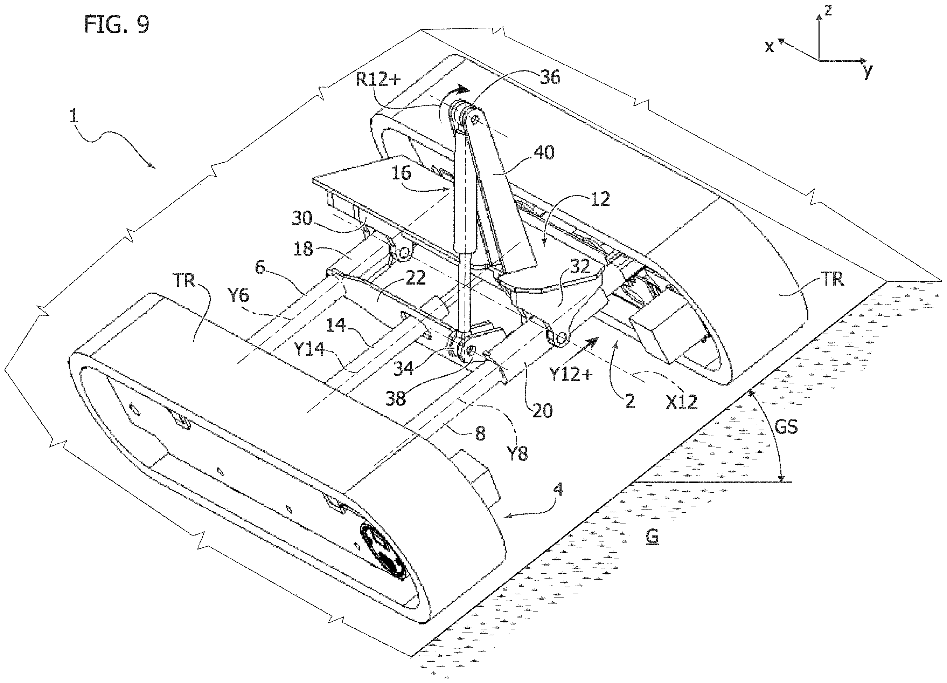

Referring specifically to Figure 9, the oscillating frame member 12 is pivotally connected to the slider 10 by means of a first hinge member 30 and a second hinge member 32, which are pivotable about corresponding hinge members provided on bushings 18, 20 (the bushing itself may carry the hinge member integrally on the surface), wherein the pivotal connection between the hinge member 30 and the bushing 18 and the pivotal connection between the hinge member 32 and the bushing 20 are aligned along axis X12. The second actuator unit 16 comprises a linear actuator A16 with an axis B16, having a first end 34 pivotally connected to slider 10 and a second end 36 pivotally connected to the oscillating frame member. The connection to the slider 10 is preferably implemented with the interposition of a cantilever hinge member 38, whereas the connection of the oscillating frame member 12 is implemented by means of an arm 40 which extends substantially vertically, in such a way as to shift the pivot point of end 36 as upwards as possible, in order to prevent actuator A16 from being located between the slider 10 and the oscillating frame member in such a position that the actuator A16 constitutes an obstacle to the movement of member 12. This brings about a sort of "masking" actuator A16, conceptually similar to the "masking" carried out on actuator A14 by means of the perforation of the plates 22 and/or 24.

The oscillating frame member 12 is shaped as an oscillating plate, which acts as an installation base for the superstructures of vehicle V. In other words, the undercarriage 1 is a modular element which lends itself to variable setups by simply varying the type of superstructures installed on the oscillating frame member 12. The same is true, as stated in the foregoing, for the motion members W installed on the longitudinal frame members 2, 4, as will be further detailed in the following.

For example, in preferred embodiments vehicle V comprises, installed on the oscillating frame member 12, a main engine E - which may be an engine, an electric motor or a hybrid implementation, one or more tanks T1, T2 (e.g., a fuel tank for the main engine E and an oil tank for a possible hydrostatic transmission, which transfers movement to the motion members W) and a cooling system CS.

In preferred embodiments, such as shown in the Figures, each longitudinal frame member 2, 4 comprises a track carrier beam comprising at least a pair of motion members (e.g., sprockets) W, on which a track TR is engaged. Each track carrier beam 2, 4 comprises an outer plate 2A, 4A and an inner plate 2B, 4B, arranged parallel to the outer plate in such a way as to define a compartment V2, V4 inside each track carrier beam 2, 4.

However, it must be borne in mind that in some embodiments the longitudinal frame members 2, 4 may be equipped - while keeping the same structure they would have in a configuration as a track carrier beam (and in this case being configured as a wheel carrier beam) - with rubber wheels or generally treaded wheels, i.e., configured for developing a traction in direct contact with the ground. The treaded wheels are installed instead of the sprockets W, and have a rotation axis which is fixed (not pivotal) in the same way as wheels W. In such cases, steering is achieved by driving in differential rotation the treaded wheels (in the same way as wheels W, being it a common technique in the case of tracked vehicles), and the system is then globally of the so called "skid steering" type.

With reference to Figures 2, 12, 13, within compartments V2 and V4 there are housed a third actuator unit 42 and a fourth actuator unit 44, both being wholly contained within the respective compartments V2, V4. In the preferred embodiment presently described, the actuator unit 42 comprises a pair of linear actuators 46, 48, and in the same way the actuator unit 44 comprises a pair of linear actuators 50, 52. Each linear actuator comprises two ends for the connection to other members, having a mutual distance which may vary as a function of the (preferably telescopic) lengthening of the actuator.

With additional reference to Figure 2A, the installation of each actuator 46, 48, 50, 52 is such that first ends thereof are pivotally connected to the inner plates 2B, 4B at the centerline thereof, and specifically at central transverse axes Y46C, Y48C for actuators 46, 48 and Y50C, Y52C for actuators 50 and 52, whereas the second ends thereof are pivotally connected to pairs of arms which respectively define an accessory coupling frame.

More specifically, at opposed longitudinal ends of the undercarriage 1 there are installed pairs of swing arms 54, 56 (the latter pair being connected transversely by means of a beam 58) and 60, 62. The swing arms 54, 56 are rotatably mounted on the transverse frame member 6, and therefore comprise a bushing applied on member 6 and enabling arms 54, 56 to perform a rotation about axis Y6. In the same way, the swing arms 60, 62 are swingingly mounted on the transverse frame member 8, and therefore comprise a bushing applied on member 8 and enabling arms 60, 62 to perform a rotation about axis Y8.

Each of the aforementioned arms comprises, with respect to the rotation axis Y6 or Y8, a crank-like elongation extending away from axis Y6, Y8, which brings about the pivotal connection to the second ends of the actuators 46, 48, 50, 52 at the peripheral axes Y46P, Y48P and Y50P, Y52P (in this regard, the crank pin traverses the plate 4A, 4B at an elongated hole having a curved shape, and then is connected to the second end of the actuators inside compartments V2, V4). The peripheral axes Y46P, Y48P and Y50P, Y52P are thus parallel (though not coinciding) to axes Y6, Y8, so as to generate a moment with respect to axis Y6, Y8 when a force is applied at axes Y46P, Y48P and Y50P, Y52P. The axes Y52P and Y48P and the axes Y46P and Y50P are moreover preferably aligned with each other (according to the listed pairs), because all the actuators 46, 48, 50, 52 are preferably the same as regards size and effective stroke, and consequently the position of the axes Y46C, Y46P, Y48C, Y48P is the same as the axes Y50C, Y50P, Y52C, Y52P.

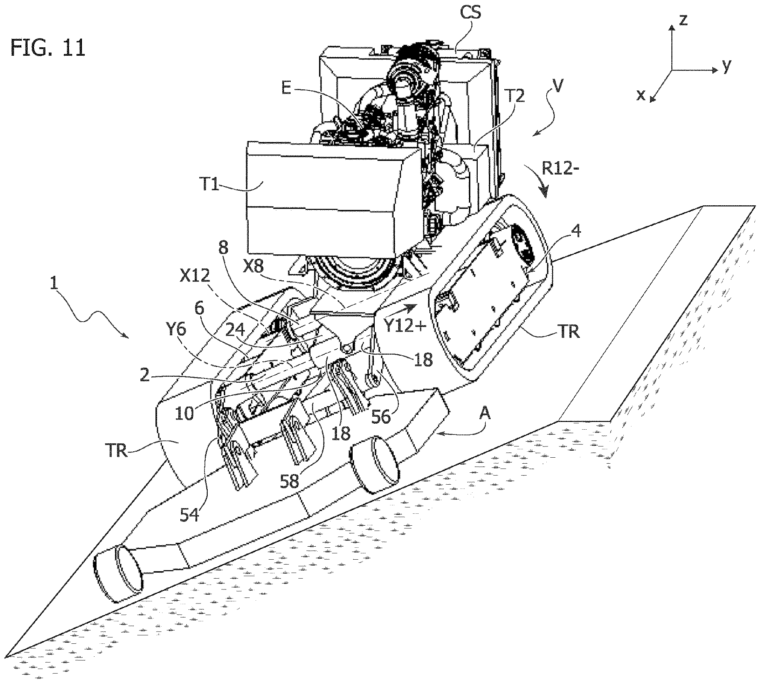

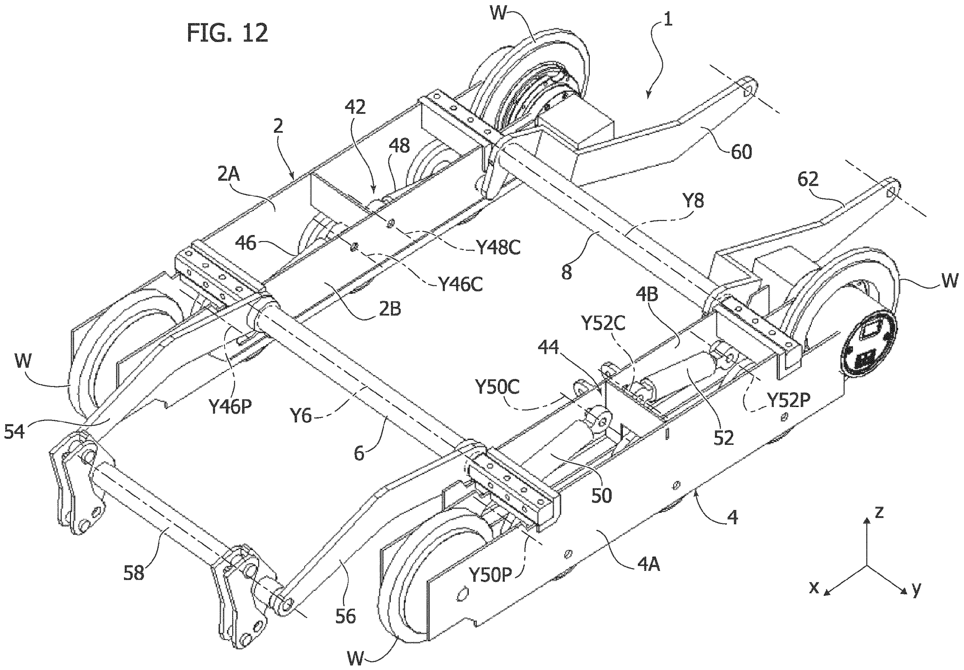

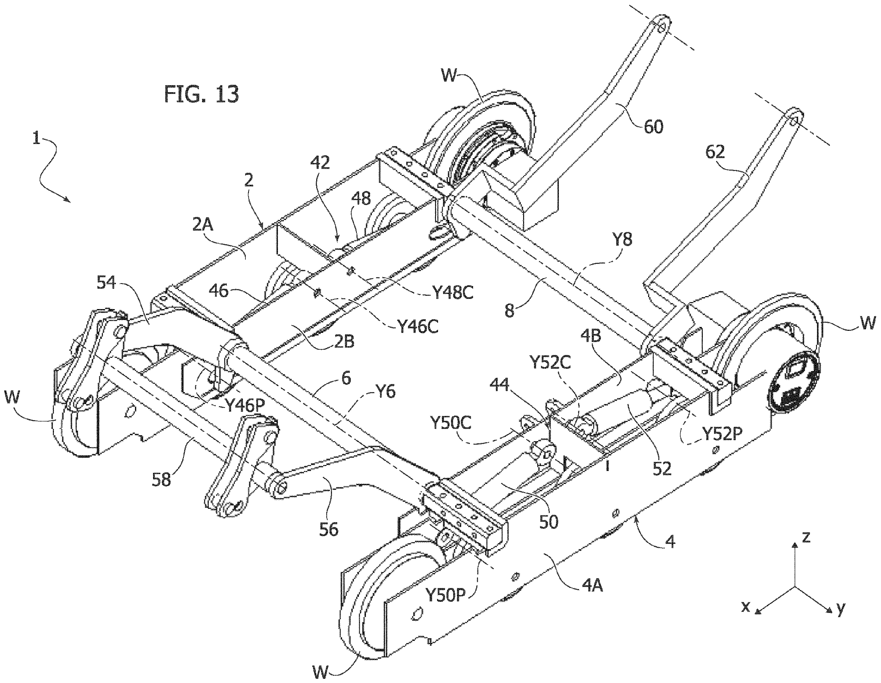

The pairs of swing arms 54, 56 and 60, 62 may be driven in a rotational movement by simply controlling a lengthening or a shortening (respectively meaning an increase of the distance between the ends of the actuators, and a decrease of the distance between the ends of the actuators) 46, 48, 50, 52. More specifically, for the position of the peripheral axes Y46P, Y50P and Y48P, Y52P with respect to the axes Y6, Y8, a lengthening of the actuators brings about an increase of the distance with respect to the central axes Y46C, Y50C and Y48C, Y52C and an upward rotation of the pairs of swing arms to the position visible in Figure 13 (rest position). On the other hand, a shortening of actuators 46, 48, 50, 52 brings about a lowering of the pairs of swing arms towards the operating position, shown in Figure 12 and in Figure 11 in association with a lawn mower accessory A.

It will be observed that the pair of arms 54-56 is driven by the pair of actuators 46, 50, while the pair of arms 60-62 is driven by the pair of actuators 48, 52. More precisely, in the presence of a transverse connection between the swing arms (as is the case with member 58), it may be sufficient to provide only one actuator to drive each pair of arms, i.e. it is possible to omit one of the two actuator units 42, 44. In any case, it will be observed that the concealment of the actuator units 42, 44 within the frame members 2, 4 (which does not necessarily involve the configuration thereof as track carrier beams) enables a thorough use of the space of undercarriage 1 for the installation of the equipment and of the on-board systems, and for the protection of the actuator units 42 and/or 48 from external agents. In this regard, the frame members 6, 8 constitute not only a guide for the movement of the slider 10, but also a rotation support for the pairs of swing arms 54, 56 and 60, 62, while further decreasing encumbrance.

The operation of the undercarriage 1 and of the vehicle V is as follows. The description will essentially be provided with reference to the undercarriage 1, being it understood that the description of vehicle V is strictly related to it, while only differing in that, compared to it, it takes into consideration what is installed on the oscillating frame member 12.

Generally speaking, the undercarriage 1 and the vehicle V assembled on the base of the undercarriage 1 are adapted to achieve both a levelling of the superstructures, in order to compensate for a transverse inclination of the ground, and a transverse shift of the whole superstructure, in order to cause a shift of the centre of gravity beyond the limits of the mere compensation of the ground inclination.

Referring to Figure 3, reference G denotes a ground which is inclined in a transverse plane (YZ) at an angle GS. In the condition shown in Figure 3, the undercarriage 1 (and the vehicle V therewith) is shown in a neutral condition, i.e. in a condition wherein the attitude of the oscillating frame member 12 is in a position consistent with the rest of the undercarriage 1; it would be horizontal if angle GS were equal to zero.

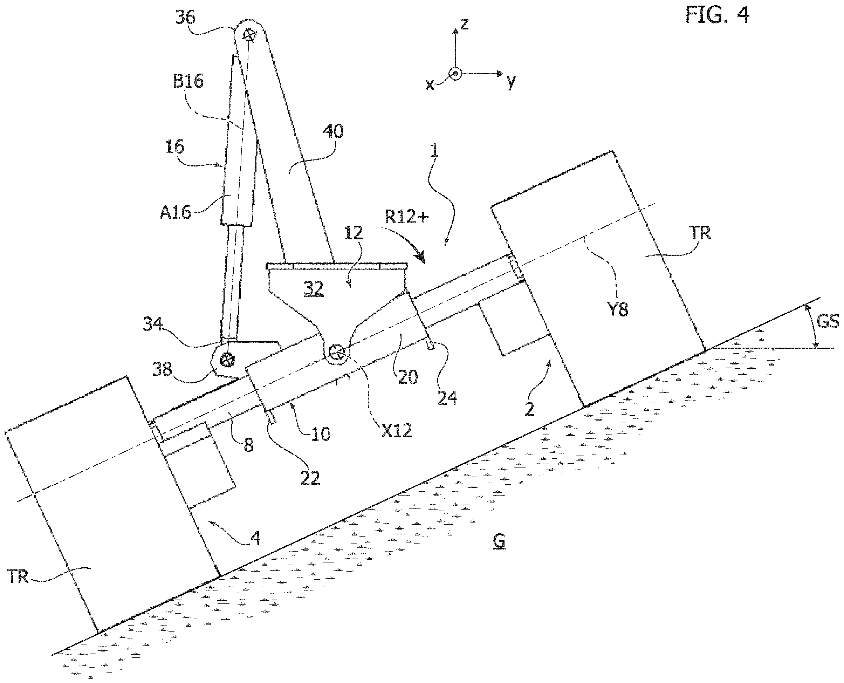

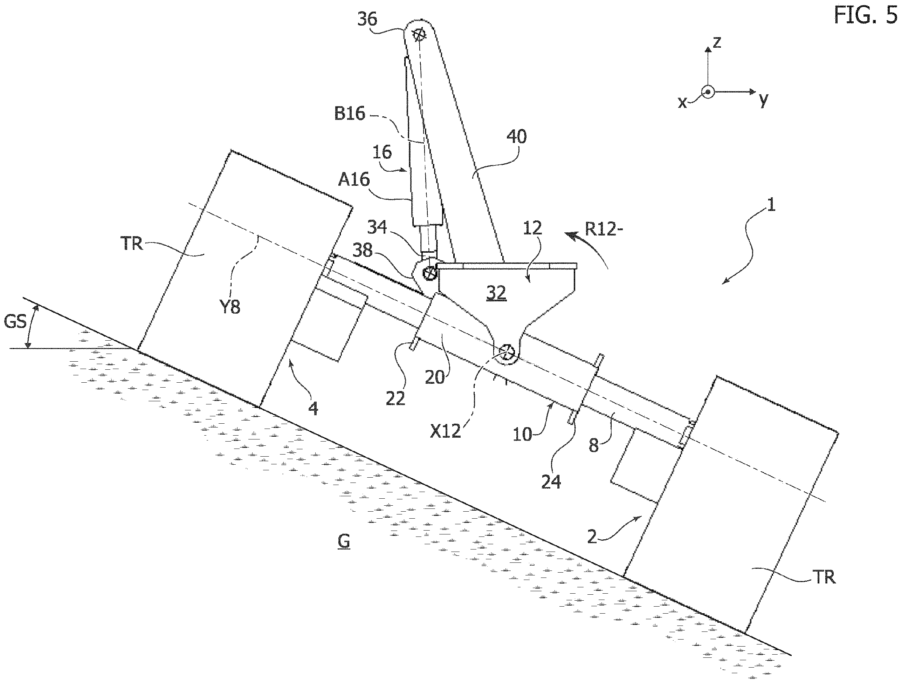

Figures 4 and 5 show an attitude compensation regarding the oscillating frame member 12 when the vehicle is advancing on ground G in the case of an inclination GS in opposite directions. Such a compensation achieves a levelling of the oscillating frame member 12 and, in the case of vehicle V, it restores the horizontal attitude of all the superstructures installed on the oscillating frame member 12. In the case of Figure 4, restoring a horizontal attitude of the oscillating frame member 12 takes place by controlling a lengthening of actuator A16 (in the case of a hydraulic or pneumatic actuator, an extraction of the stem), which generates a rotation R12+ of the oscillating frame member with respect to the slider 10 and around axis X12. In the case of Figure 5, restoring the horizontal attitude of the oscillating frame member 12 takes place by controlling a shortening of actuator A16 (a withdrawal of the stem in the case of a hydraulic or pneumatic actuator), which generates a rotation R12- of the oscillating frame member with respect to the slider 10 and around X12, which rotation is clearly opposed to rotation R12+.

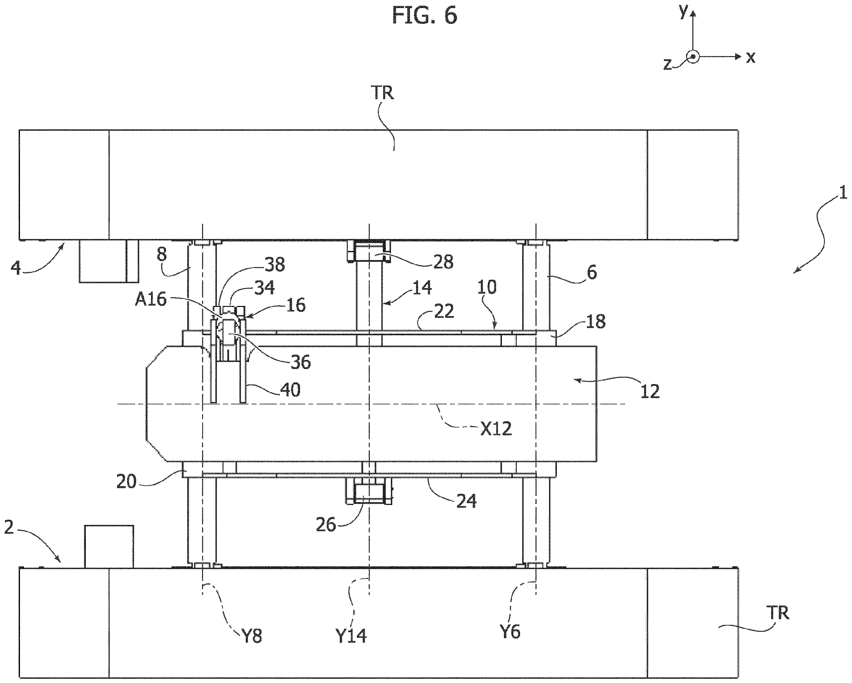

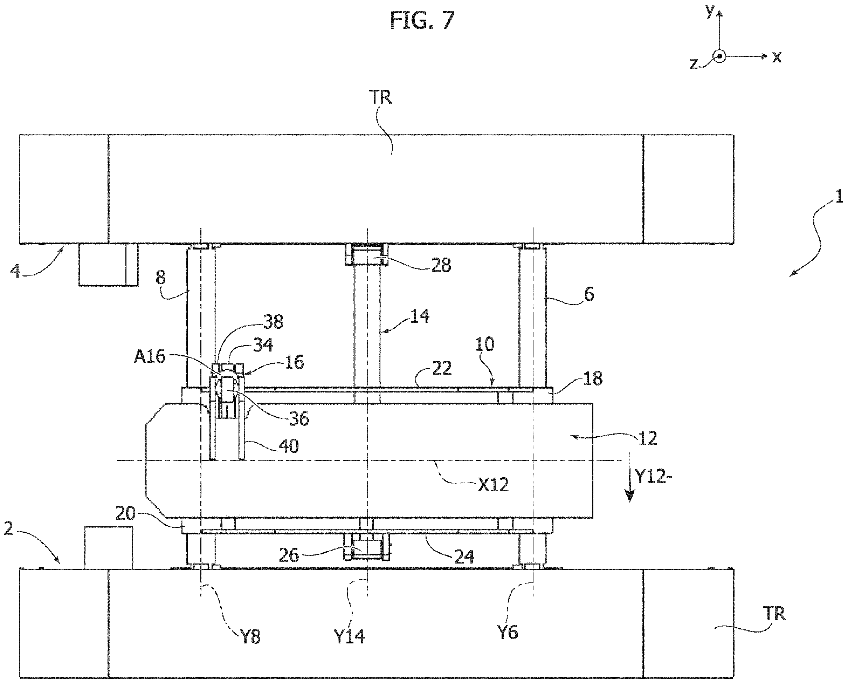

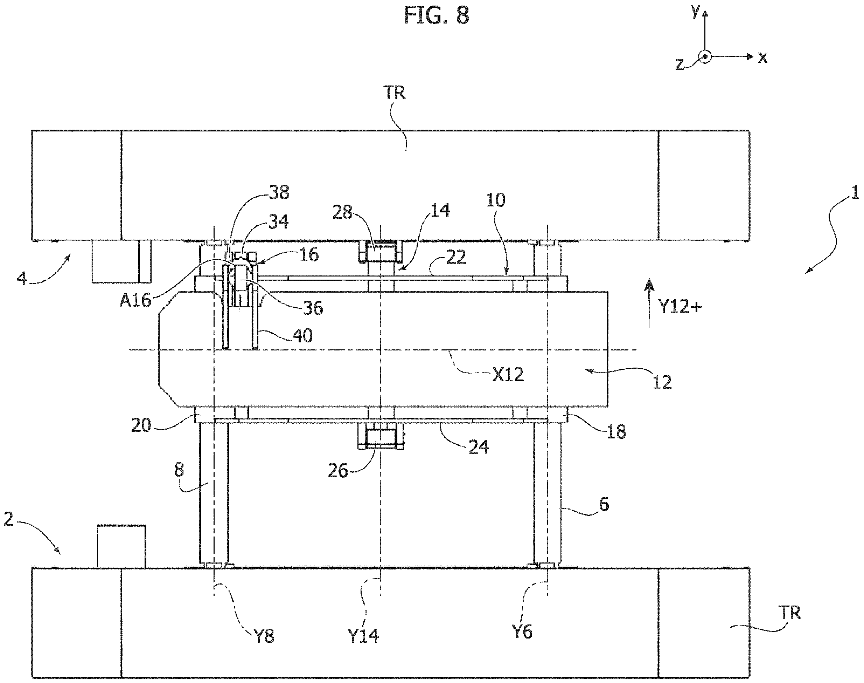

Figures 6 to 8 show the further movement coordinate of the oscillating frame member 12, in addition to the rotation coordinate around axis X12. Such a movement coordinate derives from the installation of the frame member 12 on the slider 10, and consists in the possibility of translating the whole member 12 transversely along axes Y6 and Y8, while it is being guided by the bushings 18 and 20 of the slider 10. Figure 6 shows a neutral condition, i.e. a condition wherein the oscillating frame member 12 is positioned substantially equidistant to the frame members 2, 4, while Figures 7 and 8 show the translation end positions of the slider 10 and of the frame member 12 installed thereon. In the first instance, Figure 7, the slider 10 and the member 12 have translated completely towards the frame member 2, translation Y12-, as a consequence of a lengthening of actuator A14 (an extraction of the stem, in the case of a hydraulic or pneumatic actuator), whereas in the second instance, Figure 8, the slider 10 and the member 12 have translated completely towards the frame member 4, translation Y12+, as a consequence of a shortening of actuator A14 (a withdrawal of the stem, in the case of a hydraulic or pneumatic actuator). The centre of gravity of the undercarriage 1 and of the vehicle V translates consistently with the translations Y12+ and Y12-.

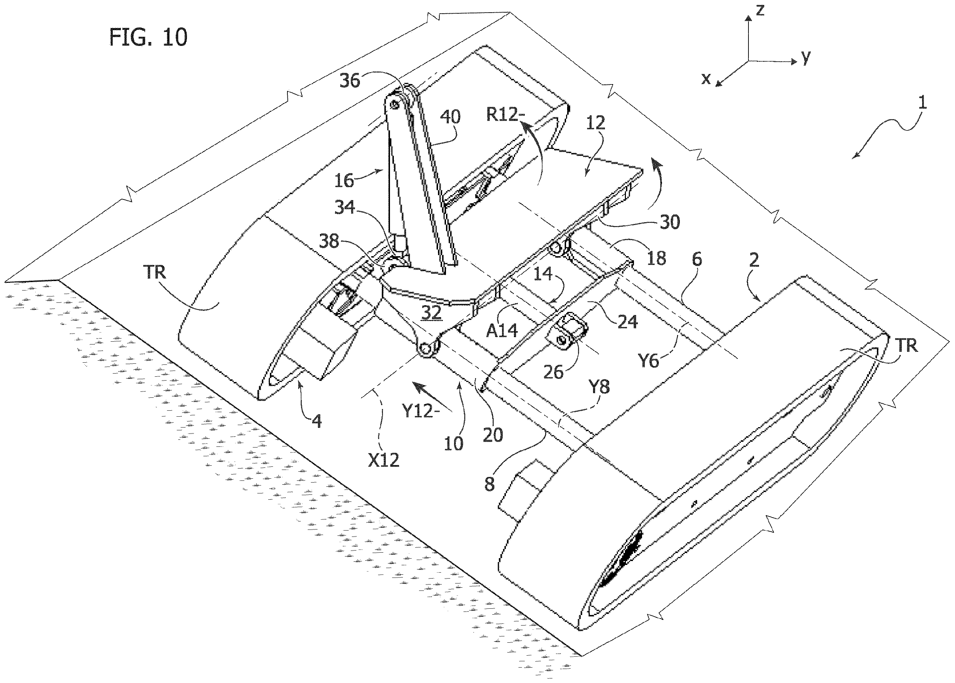

Figures 9 and 10 show two conditions of simultaneous actions of the actuator units 14 and 16, with a consequent rototranslation of the oscillating frame member 12. In the instance of Figure 9, the attitude of the frame member 12 derives from the combination of the rotation R12+ and of the translation Y12+, while in the instance of Figure 10 the attitude of the frame member 12 derives from the combination of the rotation R12- and of the translation Y12-, the two instances being different only as regards the direction of inclination of ground G.

The consequence of such a twofold correction of the attitude is not only restoring the horizontal attitude for the frame member 12 also when the undercarriage 1 / the vehicle V is advancing or is stationary on a ground G having a transverse inclination GS, but also shifting the centre of gravity towards one or the other frame member 2, 4, which equalizes or makes as similar as possible the vertical loads acting on both sides of the vehicle, and ultimately on the motion members W and on the tracks TR (if present).

This enables avoiding the drift phenomena described in the foregoing and, especially in the case of undercarriages 1 for autonomous driving vehicles, constitutes a decisive advantage in the use thereof.

Moreover, it will be appreciated that, thanks to the invention, this result is achieved by means of an undercarriage 1 which is extremely compact, and therefore particularly versatile. In this regard, the transverse frame members 6, 8, particularly if they are implemented, as mentioned in the foregoing, as rods having a circular section, are a real "functional node" which performs the structural functions, because it is a part of the frame of the undercarriage 1, and which constitutes a support for the movement of the slider 10 as well as for the rotation of the pairs of swing arms 54, 56 and 60, 62.

As for the latter aspect, Figure 11 in combination with Figures 12 and 13 clearly shows the perfect integration of the drive system of the swing arms in the undercarriage 1 and the vehicle V operating with the accessory A connected to the arms. The swinging of arms 54, 56 and 60, 62 is used to raise accessory A (and generally speaking any accessory) from the ground, e.g., in the case of a direction reversal. This is a well-known operation in the agricultural sector, because it is performed every time the vehicle reaches the limits of a field while towing, e.g., a harrow.

Figure 11 and Figure 12 show the position of the arms 54, 56 and 60, 62 when accessory A is in the operating condition. It will be observed that the condition in Figure 11 shows the combined actions of the work on ground G by means of accessory A and the twofold attitude correction of the oscillating frame 12 (rotation + translation of slider 10). In this condition, the actuators 46, 48, 50, 52 determine a condition of minimum distance between the central and peripheral axes of the ends, or generally speaking a condition of spacing smaller than the one which, on the other hand, characterises the position of Figure 13, wherein the distance is maximum or anyway higher. Of course, the arms 54, 56 and 60, 62 do not need to be operated synchronously: in other words, a pair may be raised while the other remains lowered, and vice versa. The condition of Figure 13 is reached when the need arises of raising accessory A from the ground in order to meet the needs described in the foregoing.

Moreover, it will be appreciated that, also in this case, the undercarriage 1 is exceptionally compact and efficient in making full use of the volumes on board, because the actuator units 42 and/or 44 are completely concealed within the longitudinal members 2, 4. Particularly in the case of track carrier beams, the presence of the tracks TR completely masks the actuator units 42 and/or 44 from the outside.

Also, the structure and the location of the actuator units 42 and/or 44 is so advantageous that they can be even used on board undercarriage 1 independently from the system for attitude variation/compensation of the frame member 12. In other words, it is possible to envisage embodiments of the undercarriage 1 wherein, instead of the assembly of slider 10 and member 12, a thrust bearing or vertical support is present which is fixed to the members 6 and/or 8, or directly to the longitudinal frame members 2, 4, inside which there are housed the actuator units 42 and/or 44 described in the foregoing.

More generally, in these embodiments the undercarriage 1 comprises at least one accessory coupling frame (and therefore at least one pair of swing arms 54, 56, 60, 62) mounted thereon pivotally around a transverse axes (in the present case, the axes Y6 and/or Y8). The at least one actuator unit 42, 44 is configured to drive an oscillation of the accessory frame (54, 56 or 60, 62) around the respective transverse axis Y6 and/or Y8.

This means that each actuator unit 42 and/or 44 comprises at least one linear actuator comprising a first end pivotally connected to the corresponding longitudinal frame member 2, 4 around a transverse axis (the ends are pivotally connected at axes 46C, 48C and/or 50C, 52C), and a second end pivotally connected to the corresponding accessory coupling frame (the ends are pivotally connected at axes 46P, 48P and/or 50P, 52P) at a position spaced with respect to the axis Y6 and/or Y8 whereat the accessory coupling frame is pivotally connected to the undercarriage 1.

Therefore, embodiments may be envisaged which comprise the actuator unit 42 only with actuator 46 only, and one single accessory coupling frame (e.g., frame 54, 56) connected to the actuator 46, as well as embodiments which comprise two units 42, 44 with the actuators 46, 50 only, which are both connected to the same accessory coupling frame (54, 56). Moreover, in other embodiments there is provided the actuator unit 42 only, equipped with both actuators 46, 48 and with two accessory coupling frames 54, 56 and 60, 62 at opposed longitudinal ends of the undercarriage 1. As an alternative, while keeping the provision of the two accessory coupling frames, only group 44 is provided comprising the two actuators 50, 52. Other possible (and preferred) embodiments are shown in Figure 11: the configuration has two actuator units 42, 44, each having a pair of actuators (46, 48 and 50, 52) and two accessory coupling frames. In any case, while keeping the connection of the first ends of actuators 46, 48 and 50, 52 to the longitudinal frame members 2 and/or 4, the second ends are always connected to the accessory coupling frames at axes (46P, 48P and 50P, 52P) which are eccentric and therefore different from axes Y6, Y8 at which the accessory coupling frames - if present - are pivotally mounted.

If there the system of attitude variation/compensation of frame member 12 is present, it must be borne in mind that the transverse frame members acting as a guide for the movement of slider 10 may also be present in a number higher than two - of course, the members that are located at the ends are also a pivotal connection for the arms 54, 56 and 60, 62; on the contrary, there may be present only one transverse member having a polygonal section, whereon there is installed slider 10 (for example for smaller undercarriages).

Of course, the implementation details may vary, even appreciably, from what has been described and illustrated herein without departing from the scope of the present invention, as defined by the annexed claims.

## Claims

1. An undercarriage (1) for a vehicle (V) with variable attitude comprising
- a first longitudinal frame member (2)
- a second longitudinal frame member (4)
- at least one first transverse frame member (6, 8) positioned between and connecting said first longitudinal frame member (2) and said second longitudinal frame member (4)
wherein each of said first longitudinal frame member (2) and said second longitudinal frame member (4) comprises at least one motion member (W) configured for supporting and advancing said undercarriage (1) on the ground (G)
the undercarriage (1) further comprising
- a slider (10) which engages said at least one first transverse frame member (6, 8) and is movable there along through positions comprised between said at least one first longitudinal frame member (2) and said second longitudinal frame member (4),
- a first actuator unit (14) configured to vary a position (Y12+, Y12-) of said slider (10) with respect to said first longitudinal frame member (2) and said second longitudinal frame member (4) along said at least one transverse frame member (6, 8),
- an oscillating frame member (12) pivotally connected to said slider (10) about a longitudinal axis (X12),
- a second actuator unit (16) configured to vary an angular position (R12+, R12-) of said oscillating frame member (12) with respect to said slider (10).

2. The undercarriage (1) according to claim 1, wherein said at least one first transverse frame member (6, 8) comprises a pair of transverse frame members arranged spaced from one other along the longitudinal direction (X).

3. The undercarriage (1) according to claim 2, wherein said slider (10) comprises a first bushing (18) engaging a first transverse frame member (6) of said pair, and a second bushing (20) engaging a second transverse frame member (8) of said pair.

4. The undercarriage (1) according to any one of the preceding claims, wherein said first actuator unit (14) comprises a first linear actuator having (A14) a first end (26) connected to said slider (10) and a second end (28) connected to one of said first longitudinal frame member (2) and second longitudinal frame member (4).

5. The undercarriage (1) according to claim 5, wherein said first linear actuator (A14) extends through said slider (10).

6. The undercarriage (1) according to any one of claims 2 to 5, wherein said first and second transverse frame elements (6, 8) comprise a first cylindrical rod and a second cylindrical rod, each cylindrical rod having a first end and a second end connected to said first longitudinal frame member (2) and second longitudinal frame member (4), respectively.

7. The undercarriage (1) according to any one of the preceding claims, wherein each of said first longitudinal frame member (2) and second longitudinal frame member (4) comprises, alternatively, one of:
- a track carrier beam, said track carrier beam comprising at least a pair of motion elements (W), particularly sprockets, on which a track (TR) is engaged,
- a wheel carrier beam, said wheel carrier beam comprising at least one pair of motion elements (W), particularly treaded wheels, configured for ground contact motion.

8. The undercarriage (1) according to claim 7, wherein each track carrier beam comprises an inner compartment (V2, V4) housing at least one third actuator unit (42, 44), and wherein said undercarriage (1) further comprises at least one accessory coupling frame (54, 56, 60, 62) rotatably mounted on said undercarriage (1) about a transverse axis,
said at least one third actuator unit (42, 44) being configured to drive a rotation of the accessory frame (54, 56, 60, 62) about the respective transverse axis (Y6, Y8).

9. The undercarriage (1) according to claim 1, wherein said second actuator unit (16) comprises a second linear actuator (A16) having a first end (34) connected to said slider (10) and a second end (36) connected (40) to said oscillating frame member (12).

10. Vehicle (V) comprising a undercarriage (V) according to any one of the preceding claims and a superstructure (T1, T2, E, CS) installed on said oscillating frame member (12) of said undercarriage (1) .

11. An undercarriage (1) for a vehicle (V) comprising:
- a first longitudinal frame member (2)
- a second longitudinal frame member (4)
- at least one first transverse frame member (6, 8) arranged between and connecting said first longitudinal frame member (2) and said second longitudinal frame member (4)
wherein each of said first longitudinal frame member (2) and said second longitudinal frame member (4) comprises at least one motion member (W) configured for supporting and advancing said undercarriage (1) on the ground (G)
and further wherein:
at least one of said first longitudinal frame member (2) and second longitudinal frame member (4) comprises an internal compartment (V2, V4) housing at least one actuator unit (42, 44),
and wherein said undercarriage (1) further comprises at least one accessory coupling frame (54, 56, 60, 62) rotatably mounted on said undercarriage (1) about a transverse axis, said at least one actuator assembly (42, 44) being configured to drive a rotation of the accessory coupling frame (54, 56, 60, 62) about a respective transverse axis (Y6, Y8).

12. The undercarriage (1) according to claim 11 wherein each of said first longitudinal frame member (2) and second longitudinal frame member (4) comprises an inner compartment (V2, V4) housing a respective actuator unit, each respective actuator unit (42, 44) being configured to drive a rotation of the accessory frame (54, 56, 60, 62) about the respective transverse axis (Y6, Y8).

13. The undercarriage (1) according to claim 1 or claim 12, wherein each actuator assembly (42, 44) comprises at least one linear actuator comprising a first end pivotally connected (46C, 48C, 50C, 52C) to the corresponding longitudinal frame member (2, 4) around a transverse axis and a second end pivotally connected to the corresponding accessory coupling frame, the corresponding accessory coupling frame being further pivotally connected to said undercarriage (1) around a transverse axis (Y6, Y8) distinct from the transverse axis (46P, 48P; 50P, 52P) at which said second end is pivotally connected to the corresponding accessory frame.

14. The undercarriage (1) according to claim 12, wherein each actuator assembly (42, 44) comprises a pair of linear actuators, and wherein said undercarriage comprises a first and a second accessory coupling frame arranged at opposite longitudinal ends of said undercarriage (1), each of said first accessory coupling frame and said second accessory coupling frame being rotatably connected to a respective transverse axis and being pivotally connected to a respective second end of the actuators of said pair.

15. The undercarriage (1) according to claim 13 or claim 14, wherein the transverse axis at which the first ends of each linear actuator are pivotally connected to the corresponding swing arm is different from the transverse axis (Y6, Y8) at which each of said first accessory coupling frame and said second accessory coupling frame (54, 56; 60, 62) is rotatably connected to the undercarriage (1).
